Europäisches Patentamt

European Patent Office

Office européen des brevets

(19)

(11) **EP 0 483 099 B1**

(12) **FASCICULE DE BREVET EUROPEEN**

(45) Date de publication et mention
de la délivrance du brevet:
**02.04.1997 Bulletin 1997/14**

(51) Int Cl.⁶: **C12H 1/04**

(21) Numéro de dépôt: **91870168.1**

(22) Date de dépôt: **22.10.1991**

(54) **Procédé de filtration en particulier pour la brasserie**

Filtrationsverfahren, insbesondere für die Brauerei

Filtration process particularly for the brewery

(84) Etats contractants désignés:
**AT BE CH DE DK ES FR GB GR IT LI LU NL SE**

(30) Priorité: **22.10.1990 LU 87826**

(43) Date de publication de la demande:
**29.04.1992 Bulletin 1992/18**

(73) Titulaires:
• **KRONTEC S.A.**
 **1840 Luxembourg (LU)**
• **ENGINEERING COMPANY ARTOIS N.V.**
 **Curaçao (AN)**

(72) Inventeurs:
• **Les inventeurs ont renoncé à leur désignation**

(74) Mandataire: **Lepercque, Jean et al**
 **Cabinet Claude Rodhain SA**
 **3, rue Moncey**
 **75009 Paris (FR)**

(56) Documents cités:
 **FR-A- 2 636 542       US-A- 3 146 107**
 **US-A- 3 512 987       US-A- 3 707 398**
 **US-A- 4 413 070       US-A- 4 457 900**

## Description

### Objet de l'invention

La présente invention concerne un procédé de filtration présentant des propriétés améliorées d'un liquide, notamment de bière, de moûts, de vin ou autres boissons par la technique d'alluvionnage, dans lequel on mélange le liquide à filtrer avec un adjuvant de filtration.

### Résumé de l'état de la technique et définition

Les adjuvants de filtration sont des substances divisées (généralement sous forme de granules ou de fibres) qui, employées dans les séparations solide-liquide par dépôt sur un tamis ou support, soit seules, soit en mélange avec les particules à retenir, assurent ou améliorent par une action principalement mécanique, l'efficacité de la séparation.

Cette efficacité peut se rapporter soit au niveau qualitatif du filtrat obtenu, par exemple de sa pureté ou de sa stérilité soit au niveau quantitatif par l'augmentation du débit de filtrat.

Les principaux adjuvants utilisés sont:

- les diatomées issues de la calcination des diatomites, fossiles d'algues faisant partie de la famille du plancton et généralement appelées kieselguhr;
- les perlites provenant d'une roche volcanique, la rhyolite, cette roche concassée, broyée, étant expansée plus de 20 fois dans un four de calcination;
- l'amidon par exemple sous forme de fécule de pomme de terre;
- les cendres volantes;
- la cellulose;
- des matières synthétiques telles des fibres de polymères.

Ces adjuvants forment, durant la filtration, un milieu poreux qui capte les impuretés à éliminer et facilite l'écoulement de la phase liquide.

Pour favoriser l'écoulement du filtrat, les adjuvants se doivent d'avoir une porosité élevée. De même, le milieu poreux ne doit pas se déformer sous l'effet de la pression. La distribution de la taille des pores doit être régulière pour capter les impuretés avec efficacité, ce qui implique que la distribution granulométrique des particules soit étroite. De plus, un adjuvant doit être chimiquement inerte. Idéalement, un adjuvant doit être facilement régénérable, pour des raisons d'économie d'achat mais de plus en plus également pour des raisons écologiques, les gâteaux d'adjuvants usés pouvant contenir souvent une masse fort polluante. C'est le cas en brasserie notamment.

Il est connu que ces adjuvants peuvent s'utiliser soit en précouche, soit en alluvionnage.

En précouche, l'adjuvant est déposé sur le média filtrant préalablement à la filtration de la suspension. En filtration discontinue sous pression, cette technique s'applique presque exclusivement à des suspensions d'une granulométrie inférieure à 100 microns. Dans les systèmes continus comme le filtre rotatif sous vide, la surface en contact avec le préfiltre est renouvelée à chaque cycle, c'est-à-dire après des temps de filtration très courts, par un couteau racleur. Cette technique permet de séparer des particules fines et colmatantes en relativement grandes quantités sans provoquer des chutes de débit de filtrat trop importantes.

En alluvionnage, l'adjuvant est mélangé à la suspension, préalablement à la filtration, en général grâce à une pompe doseuse qui en proportionne la concentration à celle des impuretés. Cette suspension forme un gâteau mixte composé d'adjuvant et d'impuretés. Il est très fréquent de filtrer une suspension en alluvionnage sur une précouche et ce pour réaliser un filtrat initial bien clarifié, protéger le média filtrant de la migration de fines particules pouvant le colmater et favoriser le débâtissage et le nettoyage du matériel filtrant.

L'invention vise des adjuvants convenables pour ces deux techniques de mise en oeuvre pour tous types de filtration, mais convenant particulièrement pour la technique dite d'alluvionnage.

Un secteur d'application des adjuvants particulièrement intéressant est celui de la brasserie.

Après sa maturation dans les tanks de garde, la bière doit être clarifiée avant d'être conditionnée. Les impuretés à retenir sont principalement les levures ainsi qu'un précipité de fine structure colloïdale. La filtration finale de la bière doit conduire à un produit brillant et à assurer une stabilité biologique et colloïdale suffisante du produit. Pour ce faire, deux techniques peuvent être envisagées, à savoir la filtration sur masse et la filtration en alluvionnage.

Dans le cas d'une filtration sur masse, la bière fin de garde percole sur un gâteau déjà formé appelé masse. Ce milieu poreux a pour but de retenir les levures et autres impuretés et d'assurer la qualité requise de la bière. Ces masses étaient initialement formées de coton avec un ajout d'asbeste (amiante), ensuite on utilisa d'autres formes de cellulose additionnées de diatomées et d'autres substances adsorbantes. Cette technique est encore couramment utilisée de nos jours par la Brasserie Coors (U.S.A.) et de nouveaux développements de cette méthode de clarification ont été étudiés par la firme SEN.

La seconde méthode de loin la plus usitée, est l'alluvionnage. Préalablement à la clarification de la bière, une précouche, habituellement de diatomées de perméabilité élevée, est déposée sur le média filtrant du filtre. Cette opération a pour but de protéger le média filtrant d'un colmatage par les levures et de faciliter le débâtissage du filtre après filtration. Dans de nombreux cas, une seconde précouche de grade similaire à l'adjuvant utilisé en alluvionnage est déposée pour faciliter l'obtention rapide d'un filtrat clair. Ensuite, l'opération de clarification peut débuter. Lorsque le cycle est terminé, on élimine le gâteau mixte (diatomées + levures) sous forme d'une suspension épaissie. Cette pratique de clarification de la bière, de nos jours totalement automatisée pour les filtres modernes, présente des inconvénients non négligeables, à savoir l'obligation de stocker et de manipuler des produits pulvérulents (les adjuvants en poudre) avec des risques d'atteinte aux voies respiratoires pour le personnel de manutention, l'impossibilité de régénérer en brasserie ces adjuvants vu la disparité des grades utilisés, d'où les coûts de dépollution à envisager. A ce jour cependant, une firme allemande (Tremonis) propose une régénération du kieselguhr sur un site propre, mais l'adjuvant ainsi régénéré rencontre de vives réticences de la part des brasseurs en raison de son prix et du coût du transport de l'adjuvant utilisé.

D'autre part, l'utilisation de microsphères dans différentes applications a été décrite dans les documents suivants:

- La demande de brevet FR-A-2 636 542 décrit un procédé biochimique de séparation d'une matière d'un milieu liquide à l'aide de microsphères sur lesquelles est fixé un agent de liaison. Cependant, cette fixation avec un agent de liaison augmente considérablement le coût du procédé.
- Le brevet US-A-3 707 398 décrit l'utilisation de microsphères en polystyrène avec des adjuvants tels les diatomites dans des filtres de bière, afin d'éviter la migration de ces adjuvants dans le filtrat.
- Le brevet US-A-4 457 900 décrit l'utilisation de microsphères d'acide silicique comme agent auxiliaire de filtration et/ou de stabilisation de la bière.
- Le brevet US-A-4 413 070 décrit l'utiisation de microsphères de polymères comme support de catalyse, pour fixer des métaux ou pour purifier des milieux sans mentionner l'application dans le domaine de la bière.

## Buts visés par la présente invention

La présente invention vise à fournir un adjuvant de filtration qui ne présente pas les inconvénients prémentionnés de l'état de la technique. Cet adjuvant doit en particulier convenir tout particulièrement pour une utilisation en brasserie en alluvionnage, pour la clarification de la bière.

L'invention vise en particulier à obtenir dans cette application des débits de percolation élevés, des pertes de charge réduites et une régénération aisée de ces masses.

## Eléments caractéristiques de l'invention

En opposition aux diatomées et aux perlites dont la forme des particules sont fort disparates et dont la dimension est aléatoire, le milieu de filtration proposé selon l'invention, en particulier pour la brasserie, se caractérise en ce qu'il est constitué uniquement d'un adjuvant de filtration consistant en des billes sphériques de granulométrie comprise entre 5 et 50 µm.

En particulier pour la filtration de la bière, le diamètre moyen préférentiel des billes sphériques et de l'ordre de 20 µm.

La forme sphérique permet d'avoir une répartition de la taille des pores beaucoup plus serrée, ce qui permet notamment d'éviter la formation d'une précouche.

L'intérêt principal de ce type d'adjuvant de filtration est le fait que, grâce à sa forme sphérique, la porosité du gâteau d'adjuvant est beaucoup plus faible que celle des autres types d'adjuvant, qui est proche de 0,8 à 0,9. Cette propriété permet d'avoir une épaisseur de gâteau plus réduite à quantité d'adjuvant équivalente, ce qui entraîne la possibilité d'avoir des cycles plus longs pour des gâteaux formés de ce nouvel adjuvant. A titre d'illustration, des valeurs de porosité de 0,3 à 0,5 peuvent être obtenues selon l'invention.

La surface spécifique très faible caractérise ces formes sphériques, ce qui permet d'avoir une perméabilité élevée du lit filtrant malgré une porosité basse.

Le matériau de ces billes doit, de manière générale, être incompressible, peu sensible aux effets de la température et être de qualité alimentaire. Il doit pouvoir résister aux solutions acides et offrir une résistance suffisante aux alcalis. De même, il doit présenter des propriétés de résistance suffisantes à l'abrasion et aux agents de régénération. Une masse spécifique de ces sphères, préférablement proche de celle de la suspension, permet d'annihiler les effets de décantation concomitante à la filtration. Des matériaux pouvant, par exemple satisfaire ces exigences sont le verre et les matières plastiques. Les sphères peuvent être soit pleines, soit creuses, en particulier pour adapter la masse spécifique des sphères aux conditions souhaitées.

Pour sa mise en oeuvre, ce nouvel adjuvant sera déposé sur un média filtrant inaltérable (par exemple un tissu métallique) dont la taille des pores sera plus faible que celle des particules sphériques, et ce pour éviter la migration de fines dans le média. Ce fait facilite le nettoyage de cet élément.

Etant donné la forme particulaire simple et régulière de l'adjuvant nouveau et en raison de l'absence de précouche, le gâteau formé présente une perméabilité uniforme en tout point de sa structure. Cette qualité autorise une régénération efficace in situ dans le filtre, par exemple par percolation de solution de soude caustique: on peut également opérer par repulpage en dehors du système de filtration. Cet avantage élimine le rejet de l'adjuvant à la décharge et permet l'utilisation d'un agent de stabilisation colloïdale de la bière régénérable, tel le PVPP, de manière concomitante à la clarification.

Les sphères du type de celles préconisées sont connues et vendues sur le marché sous différentes marques et appellations. Le plus généralement, on les qualifie de micro-beads ou microsphères. Elles ont été largement utilisées comme supports dans des réactions chimiques (supports de catalyseurs en lit fixe ou fluidisé), supports de produits pharmaceutiques ou de substances d'essai biologique (dans des trousses de détection, notamment anticorps-antigènes) ou encore pour des matières réfléchissantes, à l'état incorporé dans une matrice.

On a constaté que, de manière surprenante, en allant à contre-courant de la tendance d'utiliser des adjuvants de filtration à structure imbriquée, notamment à caractère fibreux, on puisse obtenir un adjuvant de filtration à la fois efficace et facile à mettre en oeuvre.

La suppression de la nécessité de formation d'une précouche est particulièrement avantageuse à cause du gain de temps qu'elle procure.

## Brève description des figures

- La figure 1 représente une vue schématique d'une installation de laboratoire standard permettant d'effectuer des essais de filtration à débit constant;
- la figure 2 représente l'évolution de la pression en fonction du temps pour un essai de filtration à débit constant.

## Description d'un mode d'exécution préféré de l'invention

Afin de mettre en évidence les propriétés remarquables obtenues en utilisant un adjuvant selon la présente invention, il convient d'effectuer un bref rappel théorique de la filtration de bière.

L'équation de fonctionnement de l'opération de filtration de bière avec adjuvant est issue de la loi de Darcy. Le débit de filtrat est proportionnel à la pression, à la surface de filtration et inversement proportionnel à la viscosité et à la résistance à l'écoulement du fluide. Cette résistance est composée de deux facteurs: le support filtrant et le gâteau de filtration.

L'équation de fonctionnement prend la forme:

$$Q = \frac{PA}{\mu \left[ Rm + \frac{\alpha CV}{A} \right]} \qquad [1]$$

où

Q est le débit instantané du filtrat $(m^3/s)$
V est le volume de filtrat écoulé $(m^3)$
P est la pression de filtration $(Pa)$
$\mu$ est la viscosité du filtrat $(Pa.s)$
Rm est la résistance du support filtrant $(m^{-1})$
C est la concentration en solides du liquide filtré $(Kg/m^3)$
$\alpha$ est la résistance spécifique du gâteau $(m/Kg)$

Lors d'une filtration à débit constant et de surface de filtration constante, la relation [1] prend la forme:

$$P = \frac{\mu \alpha C Q^2}{A^2} \cdot t + \frac{\mu Rm Q}{A} \qquad [2]$$

La relation [2] est l'équation d'une droite indiquant que la pression doit croître linéairement au cours du temps. Le terme $\frac{\mu R m Q}{A}$ caractérise la perte de charge offerte par le média, y compris les précouches d'adjuvant déposées, éventuellement, préalablement sur ce dernier, principalement pour des raisons mécaniques. Le terme $\frac{\mu \alpha C Q^2}{A}$ caractérise le gradient d'accroissement temporel de la perte de charge occasionnée par le gâteau. Ce terme est fonction de la viscosité du filtrat, de la vitesse de percolation du filtrat au sein du milieu poreux $\frac{Q}{A}$ et d'un produit $\alpha C$ que nous appellerons facteur de filtrabilité (K) exprimé en $m^{-2}$, facteur qui quantifie la filtrabilité de la suspension.

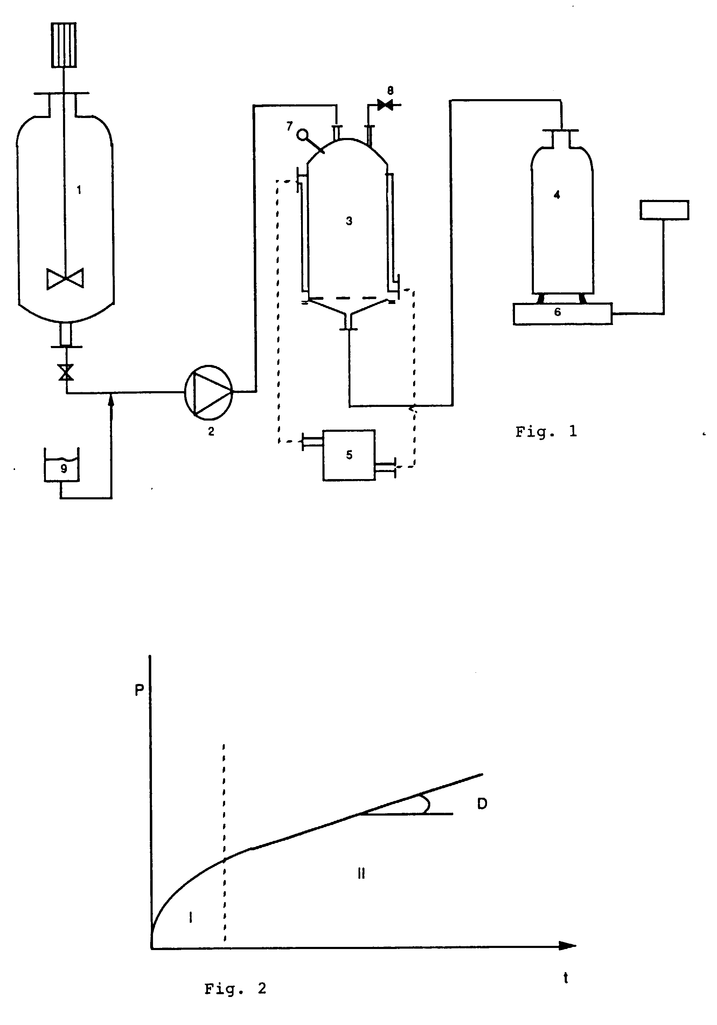

Pour caractériser ce paramètre, il suffit de réaliser un essai de filtration à débit constant, de relever la montée en pression en fonction du temps, de déterminer par une régression linéaire la pente de la droite, ce qui permet de connaître le coefficient K (voir figure 2).

L'installation de laboratoire représentée à la figure 1 est composée d'un filtre clos circulaire, de surface plane d'une superficie de 78,5 $cm^2$. L'appareil est thermostatisé pour pouvoir filtrer la bière à basse température.

En amont se trouve une cuve à bière non filtrée 1 additionnée d'un adjuvant. Cette cuve placée dans une enceinte froide, est constamment agitée pour éviter les phénomènes décantation. Une pompe péristaltique 2 véhicule la suspension à débit constant vers le filtre clos 3. La bière filtrée est récoltée dans un récipient 4 posé sur une balance 6 munie d'un timer, ce qui permet de contrôler le débit instantané de bière. Un capteur de pression 7, placé à l'entrée du filtre 3 permet de connaître la fluctuation de la pression en fonction du temps.

Après avoir rempli la cuve 1 à bière non filtrée d'une centaine de litres, l'opérateur y additionne l'adjuvant de filtration en agitant l'ensemble en vue d'avoir une suspension homogène. Pendant ce laps de temps, des précouches peuvent être déposées à l'aide d'une alimentation de la précouche 9 sur le média filtrat présent dans le filtre clos 3. L'ensemble de l'appareillage et de la bière est maintenu à une température proche de zéro degré par le groupe frigorifique 5. Avant le début de l'essai de filtration, l'installation est parfaitement dégazée au moyen d'une purge 8 placée sur le filtre-bombe 3.

La suspension bière-adjuvant est ensuite pompée, à débit constant dans le filtre clos. La bière filtrée est recueillie dans un réservoir 4 placé sur une balance 6 munie d'un timer. Ce fait permet de contrôler la régularité du débit. Il suffit alors de mesurer la variation de la pression du temps. Cette fluctuation reprise à la figure 2 permet de caractérisé la filtrabilité de la suspension.

Nous distinguons sur la figure 2 la présence de deux zones. La zone I, zone transitoire, caractérise l'écoulement d'un mélange eau-bière dû à la présence, au début de l'opération de filtration, d'eau dans le filtre et ce pour avoir un bon dégazage du système. La zone II, zone linéaire, permet de caractériser la filtrabilité de la suspension et ce en mesurant la pente de la droite (D). Cette pente est égale à

$$D = \mu \frac{Q^2}{A^2} \cdot K$$

ce qui permet de connaître sans difficulté le facteur de filtrabilité (K).

Afin de mettre en évidence les résultats expérimentaux obtenus pour la filtrabilité, deux types d'adjuvants ont été testés: un adjuvant classique en brasserie, un Kieselguhr type CBL (A1) commercialisé par la firme CECA et un adjuvant selon l'invention (A2) quasiment sphérique en nylon 11. Les essais ont été réalisés en additionnant 100 g d'adjuvant par hectolitre de bière non filtrée. La bière non filtrée est du type "Pils", contient entre 850.000 et 1.500.000 levures par ml. Les débits de filtrat ont fluctué selon les essais entre 5.5 et 13 hl/h.$m^2$. Le tableau 1 reprend les résultats obtenus.

| Essai | Débit (hl/h$m^2$) | | Charge (lev./ml) | | K ($m^{-2}$) | |
|---|---|---|---|---|---|---|
| | A1 | A2 | A1 | A2 | A1 | A2 |
| 1 | 5,5 | 6,00 | 1.200.000 | 1.100.000 | 7,2.$10^{10}$ | 1,4.$10^{10}$ |
| 2 | 5,7 | 8,40 | 830.000 | 870.000 | 11,0.$10^{10}$ | 4,9.$10^{10}$ |
| 3 | 10,0 | 10,5 | 800.000 | 850.000 | 21,0.$10^{10}$ | 3,7.$10^{10}$ |
| 4 | 10,40 | 12,40 | 1.400.000 | 1.500.000 | 8,9.$10^{10}$ | 3,8.$10^{10}$ |

Nous constatons que les filtrabilités mesurées pour les bières non filtrées, additionnées d'un adjuvant selon l'invention de forme régulière, quasi sphérique, en nylon 11, sont nettement meilleures que celles conditionnées avec un adjuvant classique (Kieselguhr - CBL). Ce fait implique que la montée en pression dans le filtre est nettement plus faible. Pour les différents essais, ce facteur K est au moins deux fois plus petit lors de l'utilisation d'un adjuvant selon l'invention (A2) que dans le cas de l'utilisation d'un adjuvant classique (A1). Cet avantage, considérable, permet d'accroître les temps de filtration avant que la pression maximum admissible sur le filtre ne soit atteinte, ce qui maximalisera la durée utile de production du filtre industriel.

**Revendications**

1. Procédé de filtration d'un liquide par la technique d'alluvionnage, dans lequel on mélange le liquide à filtrer avec un adjuvant de filtration, et on fait passer ce mélange à travers un moyen filtrant dont les mailles ont une dimension sensiblement inférieure à la dimension de l'adjuvant,
   caractérisé en ce que l'on utilise un adjuvant de filtration constitué de billes de forme régulière sphérique ou quasi sphérique en verre ou en matière plastique de granulométrie comprise entre 5 et 50 μm adaptées à former sur ledit moyen filtrant un gâteau de filtration d'une porosité comprise entre 0,3 et 0,5.

2. Procédé selon la revendication 1, caractérisé en ce que l'on utilise des billes sphériques de diamètre moyen proche de 20 μm.

3. Procédé selon la revendication 1 ou 2, caractérisé en ce que l'on utilise des billes pleines ou creuses.

4. Procédé selon l'une des revendications 1 à 3, caractérisé en ce que l'on utilise des billes dont la masse spécifique est proche de celle du liquide à filtrer.

5. Procédé selon l'une des revendications 1 à 4, caractérisé en ce que l'on utilise des billes en nylon 11.

6. Procédé selon l'une des revendications 1 à 5, caractérisé en ce qu'il ne comporte pas d'étape préliminaire de dépôt d'une précouche sur ledit moyen filtrant.

7. Procédé selon l'une des revendications 1 à 6, caractérisé en ce que l'on utilise des billes en un matériau incompressible, peu sensible à la température, résistant aux agents chimiques avec lesquels il doit entrer en contact, et à l'abrasion, ledit matériau devant être de qualité alimentaire.

8. Procédé selon l'une des revendications 1 à 7, caractérisé en ce qu'il comporte, après une étape de filtration d'une durée prédéterminée, une étape de régénération de l'adjuvant de filtration in situ.

9. Procédé selon la revendication 8, le liquide à filtrer étant de la bière à clarifier, caractérisé en ce que l'étape de régénération de l'adjuvant de filtration in situ est une étape de percolation d'une solution de soude caustique.

10. Procédé selon l'une quelconque des revendications 1 à 9, caractérisé en ce qu'il est utilisé pour la filtration de bière, de moûts, de vin ou autres boissons.

**Claims**

1. Process for filtering a liquid by the technique of alluviation, in which the liquid to be filtered is mixed with a filtration adjuvant and this mixture is passed through a means of filtering whose mesh is substantially smaller than the size of the adjuvant,
   characterized in that a filtration adjuvant is used consisting of glass or plastic beads of uniform spherical or almost spherical shape, with a particle size of between 5 and 50 μm, which are designed to form on the said means of filtering a filter cake with a porosity of between 0.3 and 0.5.

2. Process according to Claim 1, characterized in that spherical beads with an average diameter close to 20 μm are used.

3. Process according to Claim 1 or 2, characterized in that solid or hollow beads are used.

4. Process according to one of Claims 1 to 3, characterized in that beads whose density is close to that of the liquid to be filtered are used.

5. Process according to one of Claims 1 to 4, characterized in that nylon 11 beads are used.

**6.** Process according to one of Claims 1 to 5, characterized in that it does not include a preliminary step of depositing a prelayer onto the said means of filtering.

**7.** Process according to one of Claims 1 to 6, characterized in that beads made of an incompressible material which is heat resistant, resistant to the chemical agents with which it must come into contact, and abrasion resistant is used, the said material needing to be of food grade.

**8.** Process according to one of Claims 1 to 7, characterized in that it includes, after a step of filtering for a predetermined period, a step of regenerating the filtration adjuvant in situ.

**9.** Process according to Claim 8, the liquid to be filtered being beer to be clarified, characterized in that the step of regenerating the filtration adjuvant in situ is a step of percolation of caustic soda solution.

**10.** Process according to any one of Claims 1 to 9, characterized in that it is used to filter beer, must, wine or other drinks.


**Patentansprüche**

**1.** Verfahren zur Filtration einer Flüssigkeit durch die Technik der Anschwemmung, bei der man die zu filtrierende Flüssigkeit mit einem Filtrierzusatzstoff mischt und man diese Mischung durch eine Filtrierrvorrichtung fließen läßt, dessen Maschen eine Abmessung haben, die wesentlich kleiner ist als die des Zusatzstoffes, **dadurch gekennzeichnet, daß** man einen Filtrierzusatzstoff benutzt, der aus gleichmäßig kugelförmigen oder fast kugelförmigen Kügelchen aus Glas oder aus Kunststoff mit einer Korngröße zwischen 5 und 50 μm besteht, welche geeignet sind auf der Filtriervorrichtung einen Filterkuchen mit einer Porosität zwischen 0,3 und 0,5 zu bilden.

**2.** Verfahren nach Anspruch 1, **dadurch gekennzeichnet, daß** man sphärischen Kügelchen mit einem Durchmesser von etwa 20 μm benutzt.

**3.** Verfahren nach Anspruch 1 oder 2, **dadurch gekennzeichnet, daß** man massive oder hohle Kügelchen benutzt.

**4.** Verfahren nach einem der Ansprüche 1 bis 3, **dadurch gekennzeichnet, daß** man Kügelchen benutzt, deren Dichte etwa der der zu filtrierenden Flüssigkeit entspricht.

**5.** Verfahren nach einem der Ansprüche 1 bis 4, **dadurch gekennzeichnet, daß** man Nylonkügelchen 11 benutzt.

**6.** Verfahren nach einem der Ansprüche 1 bis 5, **dadurch gekennzeichnet, daß** es keine Vorstufe zur Ablagerung einer Vorschicht auf de Filtervorrichtung umfaßt.

**7.** Verfahren nach einem der Ansprüche 1 bis 6, **dadurch gekennzeichnet, daß** man Kügelchen aus einem nicht komprimierbaren, wenig temperaturempfindlichen Material benutzt, das gegen chemische Stoffe, mit denen es in Kontakt kommen muß, und gegen Verschleiß widerstandsfähig ist, wobei das Material Nahrungsmittelqualität haben muß.

**8.** Verfahren nach einem der Ansprüche 1 bis 7, **dadurch gekennzeichnet, daß** es nach einer Filtrierstufe von vorgegebener Dauer eine in-situ-Regenerationsstufe für den Filtrierzusatzstoffes umfaßt.

**9.** Verfahren nach Anspruch 8, wobei die zu filtrierende Flüssigkeit zu klärendes Bier ist, **dadurch gekennzeichnet, daß** die in-situ-Regenerationsstufe für den Filtrierzusatzstoffe eine Perkolationsstufe mit einer Lösung aus Ätzsoda ist.

**10.** Verfahren nach einem der Ansprüche 1 bis 9, **dadurch gekennzeichnet, daß** es für die Filtration von Bier, Säften, Wein oder für andere Getränke benutzt wird.

Fig. 1

Fig. 2